# EUROPEAN PATENT APPLICATION

(11) **EP 4 485 620 A1**
(43) Date of publication of application: **01.01.2025**
(21) Application number: 23208468.1
(22) Date of filing: 08.11.2023
(51) Int. Cl.: H01M 10/613, H01M 10/627, H01M 50/204, H01M 50/30

(54) **ENERGY STORAGE SYSTEM**

(30) Priority: 28.06.2023 CN 202310778561
(71) Applicant: Sungrow Energy Storage Technology Co., Ltd., Hefei, Anhui 230088 (CN)
(72) Inventor: GUO, Jian, Hefei, Anhui (CN); FANG, Ri, Hefei, Anhui (CN); GAO, Yuan, Hefei, Anhui (CN)
(74) Representative: Zacco Norway AS

(57) **Abstract**

An energy storage system includes a structural cabinet, a battery module and a PCS module mounted in the structural cabinet, where the PCS module is arranged on top of the battery module or at an end side of the battery module, and a heat insulation layer is arranged between the PCS module and the battery module. In a practical application process of the energy storage system, since the heat insulation layer is arranged between the PCS module and the battery module, even if an electric arc in the PCS module causes a fire, under an action of the heat insulation layer, flame generated by the electric arc in the PCS module mainly spreads in a direction away from the thermal insulation layer. In addition, compared with the conventional way that the PCS module is arranged below the battery module, the PCS module is arranged above the battery module or at the end side of the battery module, so that the flame generated by the electric arc in the PCS module can spread upwards or towards the end side, which greatly reduces a risk of thermal diffusion to the battery module caused by the electric arc in the PCS module.

## Description

### FIELD

The present application relates to the technical field of a structural layout of equipment, and in particular to an energy storage system.

### BACKGROUND

With a rapid development of energy storage industry, requirements for the power density of the system are increasing in the development of a large-scale energy storage device. At present, the energy storage system mainly includes a structural cabinet, a battery module, a PCS module (that is, an energy storage converter module), a thermal management system, an electrical module and a fire-fighting module in terms of structural modules. Layout solutions for the conventional energy storage system are relatively simple, and its PCS module is generally mounted below the battery module. Although it is relatively convenient for wiring, a probability of a fire caused by electric arc inside the PCS module is much greater than a probability of a fire caused by thermal runaway of the battery cluster itself from a practical operation situation of the large-scale energy storage system. A battery cluster chamber and a PCS chamber are designed for thermal insulation, however, there is still a risk of thermal diffusion to the battery module due to the fire caused by the electric arc in the PCS module.

In summary, it is urgent for those skilled in the art to solve the technical problem of the thermal diffusion to the battery module due to the fire caused by the electric arc in the PCS module of the energy storage system.

### SUMMARY

In view of this, an energy storage system is provided according to the present application to solve a problem of thermal diffusion to a battery module due to a fire caused by an electric arc in a PCS module of the energy storage system.

In order to achieve the above object, the following technical solutions are provided according to the present application.

An energy storage system includes a structural cabinet, a battery module and a PCS module mounted in the structural cabinet, and the PCS module is arranged on top of the battery module or at an end side of the battery module, and a heat insulation layer is arranged between the PCS module and the battery module.

In an embodiment, the structural cabinet is further provided with an explosion-relief assembly for relieving the battery module.

In an embodiment, the explosion-relief assembly is mounted on a front side cabinet wall and/or a back side cabinet wall of the structural cabinet.

In an embodiment, the explosion-relief assembly includes an explosion-relief portion and an explosion-relief guide portion, and the explosion-relief portion is configured for activating the pressure relief when the pressure in the structural cabinet exceeds a preset pressure, and the explosion-relief guide portion is configured for guiding the pressure relief airflow when the explosion-relief portion is activated.

In an embodiment, a thermal management unit is further mounted in the structural cabinet, and the thermal management unit includes a liquid cooling main unit, an air cooling heat dissipation module and a multi-way valve, and the liquid cooling main unit, the air cooling heat dissipation module and the multi-way valve are separately mounted and arranged in the structural cabinet.

In an embodiment, the air cooling heat dissipation module is of a flat structure, and it is arranged at a top portion of the structural cabinet.

In an embodiment, the liquid cooling main unit and the multi-way valve are arranged adjacent to each other, and both of the liquid cooling main unit and the multi-way valve are arranged at a same end side of the structural cabinet and adjacent to the air cooling heat dissipation module.

In an embodiment, a fire-fighting module, an electrical cabinet and a wiring cabinet are further mounted in the structural cabinet, and the fire-fighting module, the electrical cabinet, the wiring cabinet, the liquid cooling main unit and the multi-way valve are arranged at the same end side of the structural cabinet.

In an embodiment, the fire-fighting module, the electrical cabinet and the wiring cabinet are arranged along a depth direction of the structural cabinet. A liquid cooling mounting region is reserved on top of the fire-fighting module, the electrical cabinet and the wiring cabinet, and the liquid cooling main unit and the multi-way valve are both mounted in this liquid cooling mounting region.

In an embodiment, the air cooling heat dissipation module is arranged on the back side cabinet wall of the structural cabinet, or the air cooling heat dissipation module is arranged on the end side cabinet wall of the structural cabinet, or the air cooling heat dissipation module is arranged on the front side cabinet wall of the structural cabinet.

In an embodiment, the front side cabinet wall of the structural cabinet is provided with at least one openable cabinet door, and the air cooling heat dissipation module is arranged on the cabinet door. When the number of the cabinet doors is multiple, the number of the air cooling heat dissipation module is also multiple, and the air cooling heat dissipation modules on any two of the cabinet doors are separated from each other.

Compared with the introduction of the background technology, the energy storage system described above includes a structural cabinet, and a battery module and a PCS module mounted in the structural cabinet, where the PCS module is arranged on top of the battery module or at an end side of the battery module, and a heat insulation layer is arranged between the PCS module and the battery module. In the practical application process of the energy storage system, since the thermal insulation layer is arranged between the PCS module and the battery module, even if an electric arc in the PCS module causes a fire, flame generated by the fire caused by the electric arc in the PCS module mainly spreads in a direction away from the heat insulation layer under an action of the heat insulation layer. In addition, compared with the conventional way that the PCS module is arranged below the battery module, the PCS module is arranged on top of the battery module or at the end side of the battery module, so that the flame generated by the fire caused by the electric arc in the PCS module can spread upward or toward the end side (that is, toward the outside of the structural cabinet), which greatly reduces the risk of thermal diffusion to the battery module due to the fire caused by the electric arc in the PCS module.

### BRIEF DESCRIPTION OF THE DRAWINGS

For more clearly illustrating embodiments of the present application or technical solutions in the conventional technology, the drawing referred to for describing the embodiments or the conventional technology will be briefly described hereinafter. Apparently, the drawings in the following description are only some examples of the present application, and for those skilled in the art, other drawings may be obtained based on the provided drawing without any creative efforts.
FIG. 1 a schematic perspective view showing a structural arrangement of an energy storage system provided according to an embodiment of the present application, in which a PCS module is arranged on top of a battery module, an air cooling heat exchange module is arranged at a top side cabinet wall, and an explosion-relief assembly is arranged at a front side cabinet wall;
FIG 2 is a schematic perspective view showing a structural arrangement of an energy storage system provided according to an embodiment of the present application, in which a PCS module is arranged on top of a battery module, an air cooling heat exchange module is arranged at a top side cabinet wall, and an explosion-relief assembly is arranged at a back side cabinet wall;
FIG. 3 is a schematic perspective view showing a structural arrangement of an energy storage system provided according to an embodiment of the present application, in which a PCS module is arranged at an end side of a battery module;
FIG. 4 is a schematic perspective view showing a structural arrangement of an energy storage system provided according to an embodiment of the present application, in which a PCS module is arranged at another end side of a battery module;
FIG. 5 is a schematic top view showing a structural arrangement of an energy storage system provided according to an embodiment of the present application, in which an explosion-relief assembly is arranged at a top side cabinet wall;
FIG 6 is a schematic view showing a structural arrangement of an air cooling heat exchange module being arranged at a front side cabinet wall according to an embodiment of the present application;
FIG. 7 is a schematic view showing a structural arrangement of an air cooling heat exchange module being arranged at a back side cabinet wall according to an embodiment of the present application.

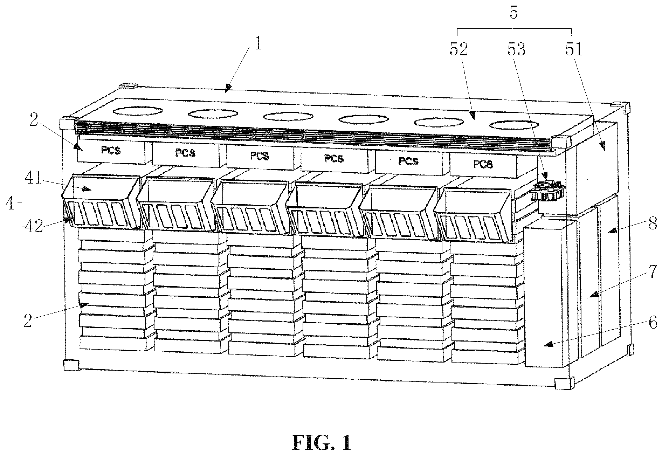

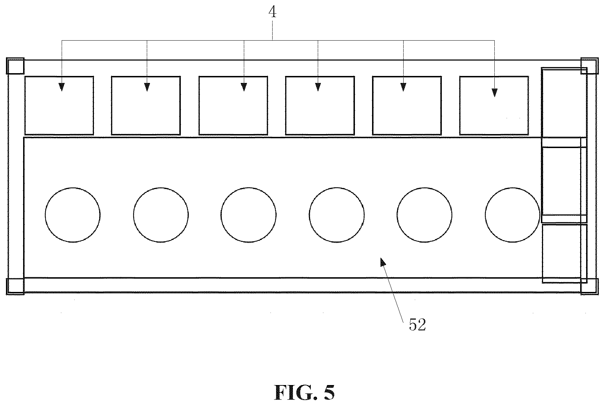

Reference numerals in FIG. 1 to FIG. 7 are listed as follows:
1 structural cabinet;
2 battery module;
3 PCS module;
4 explosion-relief assembly, 41 explosion-relief portion, 42 explosion-relief guide portion;
5 thermal management unit, 51 liquid cooling main unit, 52 air cooling heat dissipation module, 521 air inlet, 522 air outlet, 53 multi-way valve;
6 fire-fighting module;
7 electrical cabinet;
8 wiring cabinet.

### DETAILED DESCRIPTION OF THE EMBODIMENTS

A core of the present application is to provide an energy storage system to solve a problem of thermal diffusion to a battery module due to a fire caused by an electric arc in a PCS module of the energy storage system.

Technical solutions of embodiments of the present application is clearly and completely described hereinafter in conjunction with the drawings of the embodiments according to the present application. Apparently, the embodiments described are only some embodiments of the present application, rather than all embodiments. Based on the embodiments in the present application, all of the other embodiments which are obtained by those skilled in the art without any creative work fall within the protection scope of the present application.

With reference to FIG. 1 to FIG. 7, an energy storage system is provided according to the present application, including a structural cabinet 1, and a battery module 2 and a PCS module (that is, an energy storage converter module) mounted in the structural cabinet 1. Specifically, the PCS module 3 may be arranged on top of the battery module 2 or at an end side of the battery module 2, and may be selected based on actual requirements in a practical application process. In addition, a heat insulation layer is generally arranged between the PCS module 3 and the battery module 2 to insulate a battery cluster chamber, where the battery module 2 is located, from a mounting chamber where the PCS module 3 is located. According to a practical operation situation of a large-scale energy storage system, a probability of a fire caused by electric arc inside is much greater than a probability of a fire caused by thermal runaway of the battery cluster itself, so arranging the heat insulation layer between the PCS module 3 and the battery module 2 can effectively reduce a risk of the thermal diffusion to the battery module 2 due to the fire caused by the electric arc in the PCS module 3.

In the practical application process of the energy storage system, since the heat insulation layer is arranged between the PCS module 3 and the battery module 2, even if the electric arc inside the PCS module 3 causes the fire, flame generated by the fire caused by the electric arc in the PCS module 3 mainly spreads in a direction away from the heat insulation layer under an action of the heat insulation layer. In addition, compared with the conventional way that the PCS module 3 is arranged below the battery module 2, the PCS module 3 is arranged on top of the battery module 2 or at the end side of the battery module 2, so that the flame generated by the fire caused by the electric arc in the PCS module 3 can spread upward or toward the end side (that is, toward outside of the structural cabinet 1), which greatly reduces the risk of thermal diffusion to the battery module 2 due to the fire caused by the electric arc in the PCS module 3.

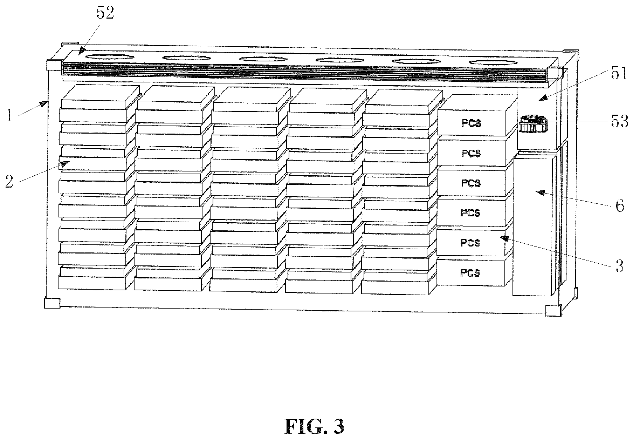

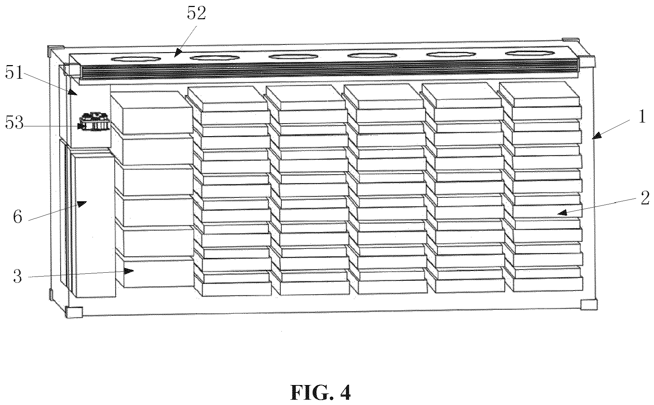

It should be noted that those skilled in the art should be able to understand that since a main electrical component loaded in the structural cabinet 1 is the battery module 2, that is, the battery module 2 occupies the largest space in the structural cabinet 1, the end side of the battery module 2 is also the end side of the structural cabinet 1, and the end side of the structural cabinet 1 refers to a left side or a right side of the structural cabinet 1 when a person facing a door-opening side of the structural cabinet 1. In addition, referring to FIG. 3 and FIG. 4, when the PCS module 3 is arranged at the end side of the battery module 2, the PCS module 3 is preferably arranged in a stacking manner in a bottom-up direction, thus forming a module-loaded chamber for the corresponding PCS, and are preferably designed between the battery module 2 and an electrical module (for example, a fire-fighting module 6, an electrical cabinet 7 and a wiring cabinet 8), which is relatively convenient for electrical connection.

In some specific embodiments, the above-mentioned structural cabinet 1 may further be provided with an explosion-relief assembly 4 for relieving the battery module 2, so as to avoid a potential safety hazard that a cabinet door of the structural cabinet 1 may explode and cause personal injury due to the explosion inside the structural cabinet 1.

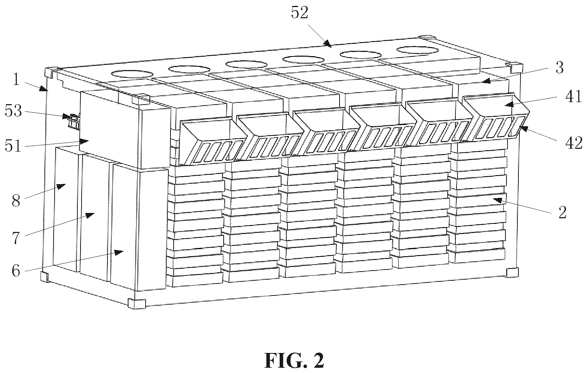

In a further embodiment, as shown in FIG. 1, the above-mentioned explosion-relief assembly 4 may be specifically mounted on a front side cabinet wall of the structural cabinet 1, or it may be mounted on a back side cabinet wall of the structural cabinet 1 as shown in FIG. 2, or the front side cabinet wall and the back side cabinet wall of the structural cabinet 1 each is provided with the explosion-relief assembly 4. Especially in a case that the PCS module 3 is arranged on top of the battery module 2, the PCS module 3 itself may occupy a dimension of the structural cabinet 1 in its depth direction, and the explosion-relief assembly 4 at this time is certainly not suitable to be mounted to a top side cabinet wall of the structural cabinet 1, so the explosion-relief assembly 4 at this time may be mounted on a front side cabinet wall and/or a back side cabinet wall. By designing the explosion-relief assembly 4 into the structural form as described above, it may well adapt to the arrangement of the PCS module 3 being arranged on top of the battery module 2. Of course, it can be understood that in a case that the PCS module 3 is arranged at the end side of the battery module 2, the explosion-relief assembly 4 may be mounted at the front side cabinet wall of the structural cabinet 1, or at the back side cabinet wall of the structural cabinet 1, or at the top side cabinet wall of the structural cabinet 1, or at other end side cabinet wall of the structural cabinet 1 opposite to the end side where the PCS module 3 is located. In the practical application process, arrangement may be based on actual needs, which is not specifically limited here.

It should be noted that the above-mentioned front side cabinet wall and the back side cabinet wall are defined on the basis of the structural cabinet 1 itself. A door-opening side cabinet wall of the structural cabinet 1 is the front side cabinet wall, and a cabinet wall opposite to the door-opening side cabinet wall is the back side cabinet wall. In addition, the depth direction of the structural cabinet 1 is also defined based on the door-opening side of the structural cabinet 1, and the depth direction refers to a direction in which the door-opening side faces the back door side.

In a further embodiment, since the explosion pressure and flame released to the surrounding environment once the explosion-relief module 4 is fully activated may cause harm to the surrounding items and people when the front explosion-relief is used, an explosion-relief guide structure is mounted at the same time when the front explosion-relief is used, thereby reducing the harm to the items and people caused by explosion-relief. Specifically, the explosion-relief assembly 4 may include an explosion-relief portion 41 and an explosion-relief guide portion 42, and the explosion-relief portion 41 is configured mainly for activating the pressure relief when the pressure in the structural cabinet 1 exceeds a preset pressure, and it may be in a structural form of an explosion-relief plate or other explosion-relief structures commonly used by those skilled in the art, which is not specifically limited here; and the explosion-relief guide portion 42 is configured mainly to guide the pressure-relief airflow when the explosion-relief portion 41 is activated, and it may be a guide plate mounted on the explosion-relief plate or other structures with airflow guidance. By designing the explosion-relief assembly 4 into the above-mentioned structural form, when an explosion occurs inside the structural cabinet 1, the explosion-relief portion 41 can be automatically activated for pressure relief, and the explosion-relief guide portion 42 can guide and release the pressurized air flow and flame, thus reducing the explosion hazard and minimizing the harm to surrounding items and people when the system explodes.

In some specific embodiments, a thermal management unit 5 may further be mounted in the above-mentioned structural cabinet 1, and specifically, the thermal management unit 5 may include a liquid cooling main unit 51, an air cooling heat dissipation module 52 and a multi-way valve 53, and the liquid cooling main unit 51 establishes a circulation loop with a heat exchanger of the battery module 2 through the multi-way valve 53, which thus can adjust a temperature of the battery module 2 to allow it run more stably. Moreover, by arranging the liquid cooling main unit 51, the air cooling heat dissipation module 52, and the multi-way valve 53 in the structural cabinet 1 in a separate and independent mounting manner, the whole thermal management unit 5 is divided into three functional modules. Compared with the conventional integrated thermal management unit, the size of a single functional module is greatly reduced, which is relatively convenient for layout and allows full use of the available space of the structural cabinet 1, and ultimately facilitates improving the integration of the whole energy storage system, so that more battery modules 2 can be arranged in a limited space, and thus the power density of the whole energy storage system can be improved.

In a further embodiment, the air cooling heat dissipation module 52 may specifically adopt a flat structure, and it is arranged at a top portion of the structural cabinet 1. By designing the air cooling heat dissipation module 52 as a flat structure, the air cooling heat dissipation module 52 can make well use of a top space of the structural cabinet 1. In addition, when the PCS module 3 is arranged at the end side of the battery module 2, since the air cooling heat dissipation module 52 does not need to occupy an entire area of the whole top portion of the structural cabinet 1, a certain top region may be reserved at a back end of the structural cabinet 1 in the depth direction for explosion-relief function (at present, through product research, the design end and the client end prefer the top explosion-relief solution, and it is required that there can be no product shielding above the explosion-relief region). In this way, the air cooling heat dissipation module and the explosion-relief region can be effectively integrated during laying out the top space of the structural cabinet 1, thus the space utilization rate at the top portion can be improved.

In other specific embodiments, the liquid cooling main unit 51 and the multi-way valve 53 are preferably designed to be arranged adjacently to each other, and both of them are arranged at the same end side of the structural cabinet 1 and adjacent to the air cooling heat dissipation module 52. By such structure, the liquid cooling main unit 51, the air cooling heat dissipation module 52 and the multi-way valve 53 are adjacent to each other, which facilitates a pipeline arrangement and electrical communication arrangement among the functional modules in later stage.

In other specific embodiments, a fire-fighting module 6, an electrical cabinet 7 and a wiring cabinet 8 may further be mounted in the structural cabinet 1, and the fire-fighting module 6, the electrical cabinet 7, the wiring cabinet 8, the liquid cooling main unit 51 and the multi-way valve 53 are arranged at the same end side of the structural cabinet 1, specifically, at the left end side or the right end side of the structural cabinet 1, and the left end side and the right end side are based on facing the door-opening side of the structural cabinet 1. By arranging these five at the same end side of the structural cabinet 1, they are spatially adjacent to each other, which facilitate the pipeline arrangement and electrical communication arrangement between the functional modules in the later stage.

In a further embodiment, the fire-fighting module 6, the electrical cabinet 7 and the wiring cabinet 8 may be specifically designed to be arranged along the depth direction of the structural cabinet 1, for example, arranged in sequence along the depth direction of the structural cabinet 1. Of course, the sequence of the fire-fighting module 6, the electrical cabinet 7 and the wiring cabinet 8 can be changed as required. In addition, a liquid cooling mounting region may be reserved at top portions of the fire-fighting module 6, the electrical cabinet 7 and the wiring cabinet 8, and the liquid cooling main unit 51 and the multi-way valve 53 are both mounted in this liquid cooling mounting region. By arranging the above-mentioned structural form, the structural arrangement is relatively compact and the space utilization rate is relatively high, so that the mounting capacity of the battery module 2 in the structural cabinet 1 with the same size is improved.

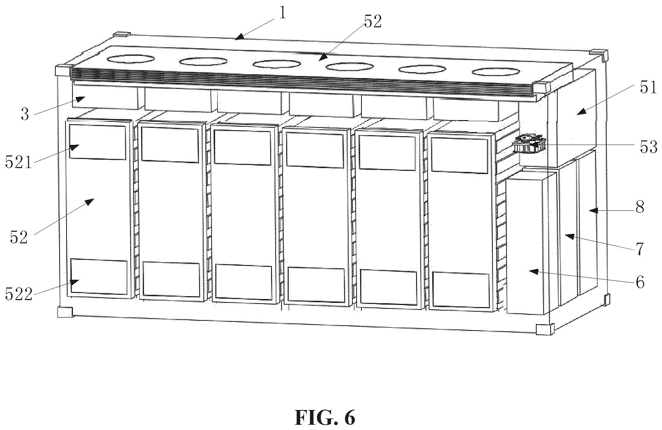

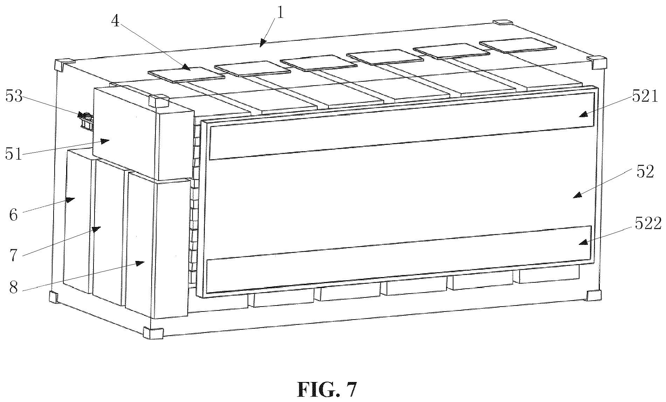

In other specific embodiments, an arrangement position for the air cooling heat dissipation module 52 may be determined based on the arrangement requirements. The air cooling heat dissipation module 52 may be arranged at the top of the structural cabinet 1 with reference to FIG. 1 to FIG. 5, and may also be arranged at the back side cabinet wall of the structural cabinet 1, as shown in FIG. 7. Alternatively, the air cooling heat dissipation module 52 may be arranged at the end side cabinet wall of the structural cabinet 1, and in addition, the air cooling heat dissipation module 52 may also be arranged at the front side cabinet wall of the structural cabinet 1, as shown in FIG. 6. In the practical application process, it can be arranged based on the specific needs, which is not specifically limited here. It should be noted that the air cooling heat dissipation module 52 generally includes an air inlet 521 and an air outlet 522. Specifically, the air inlet 521 is arranged at an upper portion of the air cooling heat dissipation module 52, and the air outlet 522 is arranged at a lower portion of the air cooling heat dissipation module 52. Alternatively, the air inlet 521 may be arranged at the lower portion of the air cooling heat dissipation module 52, and the air outlet 522 may be arranged at the upper portion of the air cooling heat dissipation module 52. In the practical application process, the arrangement may be determined based on the actual demand, which is not specifically limited here.

In some specific embodiments, at least one openable cabinet door may be arranged on the front side cabinet wall of the above structural cabinet 1, and the air cooling heat dissipation module 52 is arranged on the cabinet door. When the number of cabinet doors is multiple, the number of the air cooling heat dissipation module 52 is also multiple, and the air cooling heat dissipation module 52 on any two of the multiple cabinet doors are separated from each other. By designing in such structure, the loading space corresponding to each cabinet door can independently meet the requirements of air cooling and heat dissipation, and the maintenance is more convenient.

It should be noted that the embodiments in this specification are described in a progressive way, each of the embodiments emphasizes the differences from others, and the same or similar parts among the embodiments may be referred to each other.

It should be understood that if "system", and/or "module" are used herein, it is merely a method for distinguishing different assemblies, elements, components, parts or fittings at different levels. However, if other words serve the same object, they may be replaced by other expressions.

As shown in the present application and the claims, the words "a", "one", "one type" and/or "this" do not specifically refer to the singular, but may also include the plural, unless the context clearly indicates exceptions. Generally speaking, the terms "include" and "comprise" only indicate that the steps and elements that have been clearly identified are included, and these steps and elements do not constitute an exclusive list. Methods or equipment may also contain other steps or elements. The statement "comprising (including) a..." does not exclude the case that other identical elements exist in the process, method, product or device.

In the description of the embodiments of the present application, unless otherwise specified, "/" means or, for example, A/B can mean A or B; the "and/or" herein is only an association relationship that describes the associated objects, which means that there can be three kinds of relationships, for example, A and/or B means that there are three cases: A alone, A and B at the same time, and B alone. In addition, in the description of the embodiments of the present application, "multiple" refers to two or more.

The principle and the embodiments of the present application are illustrated herein by specific examples. The above description of the examples is only intended to facilitate the understanding of the concept of the present application. It should be noted that, for the person skilled in the art, many modifications and improvements may be made to the present application without departing from the principle of the present application, and these modifications and improvements are also deemed to fall into the protection scope of the present application defined by the claims.

## Claims

1. An energy storage system, comprising a structural cabinet (1), a battery module (2) and a PCS module (3) mounted in the structural cabinet (1), wherein the PCS module (3) is arranged on top of the battery module (2) or at an end side of the battery module (2), and a heat insulation layer is arranged between the PCS module (3) and the battery module (2).

2. The energy storage system according to claim 1, wherein the structural cabinet (1) is further provided with an explosion-relief assembly (4) for relieving the battery module (2).

3. The energy storage system according to claim 2, wherein the explosion-relief assembly (4) is mounted on a front side cabinet wall and/or a back side cabinet wall of the structural cabinet (1).

4. The energy storage system according to claim 2, wherein the explosion-relief assembly (4) comprises an explosion-relief portion (41) and an explosion-relief guide portion (42), wherein the explosion-relief part (41) is configured for activating a pressure relief when a pressure in the structural cabinet (1) exceeds a preset pressure, and the explosion-relief guide portion (42) is configured to guide a pressure relief airflow when the explosion-relief portion (41) is activated.

5. The energy storage system according to claim 1, wherein a thermal management unit (5) is further mounted in the structural cabinet (1), and the thermal management unit (5) comprises a liquid cooling main unit (51), an air cooling heat dissipation module (52) and a multi-way valve (53), and the liquid cooling main unit (51), the air cooling heat dissipation module (52) and the multi-way valve (53) are separately mounted and arranged in the structural cabinet (1).

6. The energy storage system according to claim 5, wherein the air cooling heat dissipation module (52) is in a flat structure, and it is arranged at a top portion of the structural cabinet (1).

7. The energy storage system according to claim 5, wherein the liquid cooling main unit (51) and the multi-way valve (53) are arranged adjacent to each other, both of which are arranged at a same end side of the structural cabinet (1) and are arranged adjacent to the air cooling heat dissipation module (52).

8. The energy storage system according to claim 5, wherein a fire-fighting module (6), an electrical cabinet (7) and a wiring cabinet (8) are further mounted in the structural cabinet (1), and the fire-fighting module (6), the electrical cabinet (7), the wiring cabinet (8), the liquid cooling main unit (51) and the multi-way valve (53) are arranged at the same end side of the structural cabinet (1).

9. The energy storage system according to claim 8, wherein the fire-fighting module (6), the electrical cabinet (7) and the wiring cabinet (8) are arranged along a depth direction of the structural cabinet (1); a liquid cooling mounting region is reserved at top portions of the fire-fighting module (6), the electrical cabinet (7) and the wiring cabinet (8), and the liquid cooling main unit (51) and the multi-way valve (53) are both mounted in the liquid cooling mounting region.

10. The energy storage system according to claim 5, wherein the air cooling heat dissipation module (52) is arranged on the back side cabinet wall of the structural cabinet (1); or the air cooling heat dissipation module (52) is arranged on the end side cabinet wall of the structural cabinet (1); or the air cooling heat dissipation module (52) is arranged on the front side cabinet wall of the structural cabinet (1).

11. The energy storage system according to claim 5, wherein at least one openable cabinet door is arranged on the front side cabinet wall of the structural cabinet (1), and the air cooling heat dissipation module (52) is arranged on the cabinet door, wherein when a plurality of cabinet doors is provided, a plurality of air cooling heat dissipation modules (52) is provided, and the air cooling heat dissipation modules (52) on any two of the cabinet doors are separated from each other.

## Amended claims

### Amended claims in accordance with Rule 137(2) EPC.

1. An energy storage system, comprising a structural cabinet (1), a battery module (2) and a PCS module (3) mounted in the structural cabinet (1), wherein the PCS module (3) is arranged on top of the battery module (2) or at an end side of the battery module (2), and a heat insulation layer is arranged between the PCS module (3) and the battery module (2).

2. The energy storage system according to claim 1, wherein the structural cabinet (1) is further provided with an explosion-relief assembly (4) for relieving the battery module (2).

3. The energy storage system according to claim 2, wherein the explosion-relief assembly (4) is mounted on a front side cabinet wall and/or a back side cabinet wall of the structural cabinet (1).

4. The energy storage system according to claim 2, wherein the explosion-relief assembly (4) comprises an explosion-relief portion (41) and an explosion-relief guide portion (42), wherein the explosion-relief portion (41) is configured for activating a pressure relief when a pressure in the structural cabinet (1) exceeds a preset pressure, and the explosion-relief guide portion (42) is configured to guide a pressure relief airflow when the explosion-relief portion (41) is activated.

5. The energy storage system according to claim 1, wherein a thermal management unit (5) is further mounted in the structural cabinet (1), and the thermal management unit (5) comprises a liquid cooling main unit (51), an air cooling heat dissipation module (52) and a multi-way valve (53), and the liquid cooling main unit (51), the air cooling heat dissipation module (52) and the multi-way valve (53) are separately mounted and arranged in the structural cabinet (1).

6. The energy storage system according to claim 5, wherein the air cooling heat dissipation module (52) is in a flat structure, and it is arranged at a top portion of the structural cabinet (1).

7. The energy storage system according to claim 5, wherein the liquid cooling main unit (51) and the multi-way valve (53) are arranged adjacent to each other, both of which are arranged at a same end side of the structural cabinet (1) and are arranged adjacent to the air cooling heat dissipation module (52).

8. The energy storage system according to claim 5, wherein a fire-fighting module (6), an electrical cabinet (7) and a wiring cabinet (8) are further mounted in the structural cabinet (1), and the fire-fighting module (6), the electrical cabinet (7), the wiring cabinet (8), the liquid cooling main unit (51) and the multi-way valve (53) are arranged at the same end side of the structural cabinet (1).

9. The energy storage system according to claim 8, wherein the fire-fighting module (6), the electrical cabinet (7) and the wiring cabinet (8) are arranged along a depth direction of the structural cabinet (1); a liquid cooling mounting region is reserved at top portions of the fire-fighting module (6), the electrical cabinet (7) and the wiring cabinet (8), and the liquid cooling main unit (51) and the multi-way valve (53) are both mounted in the liquid cooling mounting region.

10. The energy storage system according to claim 5, wherein the air cooling heat dissipation module (52) is arranged on the back side cabinet wall of the structural cabinet (1); or the air cooling heat dissipation module (52) is arranged on the end side cabinet wall of the structural cabinet (1); or the air cooling heat dissipation module (52) is arranged on the front side cabinet wall of the structural cabinet (1).

11. The energy storage system according to claim 5, wherein at least one openable cabinet door is arranged on the front side cabinet wall of the structural cabinet (1), and the air cooling heat dissipation module (52) is arranged on the cabinet door, wherein when a plurality of cabinet doors is provided, a plurality of air cooling heat dissipation modules (52) is provided, and the air cooling heat dissipation modules (52) on any two of the cabinet doors are separated from each other.
